(19) Europäisches Patentamt

European Patent Office

Office européen des brevets

(11) Veröffentlichungsnummer: **0 229 418 B1**

(12) **EUROPÄISCHE PATENTSCHRIFT**

(45) Veröffentlichungstag der Patentschrift: **18.03.92**

(21) Anmeldenummer: **86202225.8**

(22) Anmeldetag: **10.12.86**

(51) Int. Cl.⁵: **A23G 9/12, A23G 9/22**

(54) **Speiseeisbereiter mit einem die Eismasse aufnehmenden topfförmigen Behälter.**

(30) Priorität: **18.12.85 DE 3544671**

(43) Veröffentlichungstag der Anmeldung:
**22.07.87 Patentblatt 87/30**

(45) Bekanntmachung des Hinweises auf die
Patenterteilung:
**18.03.92 Patentblatt 92/12**

(84) Benannte Vertragsstaaten:
**DE ES FR GB IT NL**

(56) Entgegenhaltungen:
**EP-A- 0 140 439      WO-A-85/03998
DE-A- 3 544 671      FR-A- 1 252 191
FR-A- 2 403 747      FR-A- 2 547 991
US-A- 3 985 347      US-A- 4 417 506**

**Das Hobbythekbuch Nr. 6, 4. Auflage 1985, S.
19-22**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfa-**
brieken
**Groenewoudseweg 1
NL-5621 BA Eindhoven(NL)**

(84) Benannte Vertragsstaaten:
**ES FR GB IT NL**

(72) Erfinder: **Bertram, Leo
Am Sender 10
W-5190 Stolberg(DE)**
Erfinder: **Schemmann, Hugo, Dr.
Zwartebergweg 6
NL-6371 Schaesberg(NL)**
Erfinder: **Bukoschek, Romuald Leander
Dr. Palla-Gasse 28
A-9020 Klagenfurt(AT)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

# Beschreibung

Speiseeisbereiter mit einem die Eismasse aufnehmenden topfförmigen Behälter

Die Erfindung bezieht sich auf einen Speiseeisbereiter mit einem eine Eismasse aufnehmenden topfförmigen Behälter, mit einer Wandoberfläche, die wärmeleitend verbunden ist mit einem Medium, das die zur Eisbildung benötigte Kälte liefert, insbesondere ein kältespeicherndes Medium, und mit einem von einem Elektromotor über ein Untersetzungsgetriebe angetriebenes Schab- und Ruhrwerkzeug, das mit seiner Schabefläche über die Wandoberfläche hinwegschabt.

Aus der DE-OS 28 31 592 ist eine Speiseeismaschine zur Herstellung von Softeis bekannt, die mit einem topfförmigen Behälter zur Aufnahme der Eismasse versehen ist. In den Behälter ist eine Kältepatrone einlegbar. Es ist ein Schab- und Ruhrwerk vorgesehen, das mittels eines Elektromotors und eines Getriebes in Drehung versetzt wird und dabei über die Oberseite der Kältepatrone hinwegschabt und gleichzeitig die Eismasse im Behälter rührt.

Für eine gute und zügige Speiseeisbereitung ist ein genügendes Anfrieren der Eismasse an der kälteabgebenden Fläche zwischen zwei Abschabezyklen wichtig. Zudem ist eine gute Durchmischung erforderlich, um eine schließlich im ganzen Behälter gleichmäßig feste Eiskonsistenz zu erhalten.

Aus dem "Hobbythek"-Buch, Nr. 6, ist es bekannt, daß bei der Eisherstellung mit Hilfe einer Kältemischung aus Salz und Wasser von -18°C bis -20°C das Anfrieren der Eismasse an der Topfwand einen kritischen Augenblick der Eisherstellung darstellt. Man hilft sich bei der Von-Hand-Herstellung von Speiseeis dann, wenn das Abkratzen wegen zunehmender Schichtdicke zu viel Kraft erfordert, mit einem Abheben des Topfes vom Kältemittel, also einem Unterbrechen des Wärmeentzuges. Dies ist bei einer für sich allein arbeitenden Maschine nicht möglich.

Bekannte Eismaschinen arbeiten bei hohen Drehzahlen zwischen 50 und 100 U/min mit starken Motoren im Bereich von 80 W Leistungsaufnahme bei einer mechanischen Wellenleistung von 30 W bis 40 W. Die Eisbereitungszeit beträgt ca. 30 Minuten bei einer Eismenge von ca. 0,5 l Speiseeis. Diese Geräte sind voluminös, unwirtschaftlich und haben einen schlechten elektrischen und kälteenergietechnischen Wirkungsgrad.

Es ist Aufgabe der Erfindung, einen maschinellen Speiseeisbereiter zu schaffen, bei dem Eis in ausreichender Menge unter Verwendung eines preiswerten Motors kleiner Leistung hergestellt werden kann und der in einem für die Eisbereitung günstigen Verhältnis von Anfrierdicke des Speiseeises und Abschabegeschwindigkeit arbeitet.

Die gestellte Aufgabe ist erfindungsgemäß dadurch gelöst, daß

a) der Topf- bzw. Werkzeugdurchmesser auf ca. 16 bis 20 cm bemessen ist,

b) die Schab- und Rührgeschwindigkeit mittels des Untersetzungsgeteriebes eingestellt ist auf einen Drehzahlbereich zwischen 18 und 30 U/min,

c) der Wärmetransport zwischen dem kältespeichernden Medium, das in einer Kältepatrone untergebracht ist und in wärmeleitendem Kontakt mit dem topfförmigen Behälter steht, und der Wandoberfläche, von der die anfrierende Eismasse abgeschabt wird, darauf abgestimmt ist, daß die Dicke der sich bildenden Eisschicht zwischen zwei Abschabezyklen nicht größer als etwa 2 mm ist,

d) die abgegebene Leistung des Antriebsmotors auf kleiner als 10 W ausgelegt ist.

Es zeigt sich überraschenderweise, daß bei einer Umlaufgeschwindigkeit des Schab- und Rührwerkzeuges zwischen 18 und 30 U/min die Speiseeismasse genügend Zeit hat, an der kälteabgebenden Fläche im Behälter anzufrieren. Auch erfolgt gleichzeitig eine gute Durchmischung.

Da das Anfrieren so begrenzt ist, daß an der kälteabgebenden Fläche während eines Schabezyklus eine Schicht nicht dicker als 2 mm ansetzt oder anfriert, kann die Antriebsleistung des Antriebsmotors herabgesetzt werden. Das Schab- und Rührwerkzeug kann die angefrorene Eismasse noch einwandfrei abschaben, wenn die abgegebene Leistung des Antriebsmotors bei einem Topf- bzw. Werkzeugdurchmesser von ca. 16 bis 20 cm auf kleiner als 10 W, vorzugsweise 5 W, ausgelegt ist. Für solche Leistungen eignet sich dann der Einsatz eines verlustarmen zweipoligen Einphasensynchronmotors als Antriebsmotor. Durch die Herabsetzung der in Wärme umzuwandelnden Rührverluste auf weniger als 10 W kann auch der Kälteinhalt der Kältepatrone herabgesetzt werden. Bei der vorgesehenen Abstimmung der Parameter ergibt sich innerhalb kurzer Zeit eine gute Speiseeisqualität.

Nach einer weiteren Ausgestaltung der Erfindung ist vorgesehen, daß die Drehzahl auf 20 bis 26 U/min eingestellt ist.

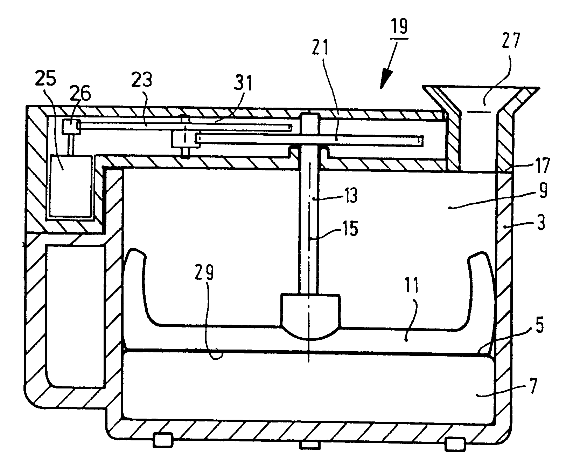

Die Erfindung wird anhand das in der Zeichnung dargestellten Ausführungsbeispieles näher erläutert.

Der dargestellte Speiseeisbereiter weist einen topfförmigen, thermisch isolierten Behälter 3 auf. Der Boden 5 des Behälters 3 dient als thermische Übergangsfläche für Wärmeenergie. Unterhalb des Bodens 5 befindet sich beispielsweise in einer Kältepatrone ein Latent-Wärmespeichermedium 7. Der Topfboden 5 kann aber auch auf andere Art und Weise gekühlt werden.

Im Eisbereitungsraum 9 innerhalb des topfförmigen Behälters 3 ist ein Schab- und Rührwerkzeug 11 angeordnet. Dieses Schab- und Rührwerkzeug 11 ist mittels einer Welle 13 drehbar. Die Wellenachse ist mit 15 bezeichnet.

Auf die Oberseite 17 des topfförmigen Behälters 3 ist ein Deckel 19 aufsetzbar, in dem die Welle 13 gelagert ist. Die Welle 13 trägt auch ein Zahnrad 21, das mit einem Zwichenzahnrad 23 kämmt, das von einem Einphasensynchronmotor 25 über ein Ritzel 26 angetrieben wird. Am Deckel 19 ist ein Einfülltrichter 27 vorgesehen, durch den eine flüssige Speiseeismasse in das Behälterinnere 9 einfüllbar ist.

Das Schab- und Rührwerkzeug 11 schabt mit seiner Schabefläche 29 über den Behälterboden 5 hinweg. Bei dem Entlangschaben über die Bodenfläche 5 wird Eismasse, die an der Bodenfläche anfriert, abgeschabt und in die übrige Eismasse innerhalb des Behälterinnenraumes 9 hineingerührt. Es kommt bei dem Abschaben und Umrühren darauf an, das sich ansetzende Eis nicht zu rasch abzuschaben, damit dem Eisansatz eine gewisse Ruhe vergönnt ist.

Andererseits darf der Eisansatz nicht zu dick werden, so daß der Motor dann infolge zu hohen Widerstandes überlastet wird. Insbesondere ein zu rasches Abschaben erzeugt zu viel Wärmeenergie, die erst wieder durch Wärmeentzug aus dem Kältemedium ausgeglichen werden muß. Das Übersetzungsverhältnis zwischen der Umlaufbewegung der Motorwelle 31 und der Werkzeugwelle 13 ist deshalb so gewählt, daß das Schab- und Rührwerkzeug in einem Drehzahlbereich zwischen 18 und 35 U/min umläuft. Bevorzugt sind dabei Drehzahlen zwischen 20 und 26 U/min. In diesem Fall ist der Wärmetransport durch den Behälterboden 5 so abgestimmt, daß die Dicke der sich bildenden Eisschicht zwischen zwei Abschabzyklen kleiner als etwa 2 mm gehalten wird. In einem solchen Fall kann die abgegebene Leistung des Antriebsmotors bei einem Topf- bzw. Werkzeugdurchmesser von ca. 16 bis 20 cm auf kleiner als 10 W, vorzugsweise auf 5 W, ausgelegt sein. Hierdurch wird es möglich, als Antriebsmotor beispielsweise einen verlustarmen zweipoligen Einphasensynchronmotor einzusetzen, der selbst nur wenig Wärme entwickelt und der deshalb die Eisbereitung wärmetransportmäßig nicht behindert.

**Patentansprüche**

1. Speiseeisbereiter mit einem eine Eismasse aufnehmenden topfförmigen Behälter (3), mit einer Wandoberfläche (5), die wärmeleitend verbunden ist mit einem Medium (7), das die zur Eisbildung benötigte Kälte liefert, insbesondere ein kältespeicherndes Medium, und mit einem von einem Elektromotor (25) über ein Untersetzungsgetriebe angetriebenes Schab- und Rührwerkzeug (11), das mit seiner Schabefläche (29) über die Wandoberfläche (5) hinwegschabt,
dadurch gekennzeichnet, daß
   a) der Topf- bzw. Werkzeugdurchmesser auf ca. 16 bis 20 cm bemessen ist,
   b) die Schab- und Rührgeschwindigkeit mittels des Untersetzungsgetriebes eingestellt ist auf einen Drehzahlbereich zwischen 18 und 30 U/min,
   c) der Wärmetransport zwischen dem kältespeichernden Medium (7), das in einer Kältepatrone (6) untergebracht ist und in wärmeleitendem Kontakt mit dem topfförmigen Behälter steht, und der Wandoberfläche (5), von der die anfrierende Eismasse abgeschabt wird, darauf abgestimmt ist, daß die Dicke der sich bildenden Eisschicht zwischen zwei Abschabezyklen nicht größer als etwa 2 mm ist,
   d) die abgegebene Leistung des Antriebsmotors auf kleiner als 10 W ausgelegt ist.

2. Speiseeisbereiter nach Anspruch 1, dadurch gekennzeichnet, daß die Drehzahl auf 20 bis 26 U/min eingestellt ist.

3. Speiseeisbereiter nach den Ansprüchen 1 oder 2, dadurch gekennzeichnet, daß die abgegebene Leistung des Antriebsmotors 5 W ist.

4. Speiseeisbereiter nach einem der Ansprüche 1 bis 3, dadurch gekennzeichnet, daß der Antriebsmotor ein verlustarmer Motor ist.

**Claims**

1. An icecream machine comprising a pot-shaped container (3) for receiving the icecream, which container has a wall surface (5) which is in thermally conductive contact with a medium (7) which provides the cold required for the ice formation, in particular a cold-storing medium, and a scraping and stirring tool (11) which is driven by an electric motor (25) *via* a reduction mechanism and which scrapes with its scraping surface (29) over the wall surface (5),
characterised in that
   a) the container or tool diameter is dimensioned to be approximately 16 to 20 cm,
   b) by means of the reduction mechanism the scraping and stirring speed is set to a speed range between 18 and 30 r.p.m.,
   c) the heat transfer between the cold-storing medium (7), which is present in a cold cartridge (6) and is in thermally conductive contact with the pot-shaped container, and the wall surface (5), from which the frozen-on icecream mass is scraped, is adapted to achieve that the thickness of the ice layer forming between two scraping cycles is not larger than approximately 2 mm,

d) the drive motor is dimensioned to provide an output power smaller than 10 W.

2. An icecream machine as claimed in Claim 1, <u>characterised in that</u> the speed is set to 20 to 26 r.p.m.

3. An icecream machine as claimed in Claim 1 or 2, <u>characterised in that</u> the output power of the drive motor is 5 W.

4. An icecream machine as claimed in any one of the Claims 1 to 3, <u>characterised in that</u> the drive motor is a low-loss motor.

**Revendications**

1. Sorbetière munie d'un récipient en forme de cuve (3) servant à recevoir une masse glacée, d'une surface de paroi (5) reliée en conduction thermique avec un milieu (7) fournissant le froid nécessaire à la formation de glace, notamment un milieu accumulant le froid, et d'un outil de raclage et d'agitation (11) entraîné par un moteur électrique (25) par l'intermédiaire d'un démultiplicateur et qui balaie la surface de paroi (5) par sa face de raclage (29), caractérisée en ce que

a) le diamètre de la cuve ou de l'outil est compris entre 16 et 20 cm environ,

b) la vitesse de raclage et d'agitation est réglée, au moyen du démultiplicateur, à une gamme de vitesses de rotation comprise entre 18 et 30 tours/mn,

c) le transport de chaleur entre, d'une part, le milieu accumulateur de froid (7) contenu dans une cartouche de froid (6) et qui est en contact de conduction de chaleur avec le récipient en forme de cuve et, d'autre part, la surface de paroi (5) d'où est enlevée par raclage la masse glacée qui s'y attache par congélation, est réglé de façon que l'épaisseur de la couche glacée ainsi formée ne soit pas supérieure à 2 mm environ entre deux cycles de raclage,

d) la puissance débitée du moteur d'entraînement est inférieure à 10 W.

2. Sorbetière selon la revendication 1, caractérisé en ce que la vitesse de rotation est réglée à une valeur comprise entre 20 et 26 tours/mn.

3. Sorbetière selon la revendication 1 ou 2, caractérisée en ce que la puissance débitée du moteur d'entraînement est de 5 W.

4. Sorbetière selon l'une des revendications 1 a 3, caractérisée en ce que le moteur d'entraînement est un moteur à faibles pertes.